# EUROPÄISCHE PATENTSCHRIFT

(11) **EP 0 840 948 B1**
(45) Veröffentlichungstag und Bekanntmachung des Hinweises auf die Patenterteilung: **11.08.1999**
(21) Anmeldenummer: 96917425.9
(22) Anmeldetag: 24.05.1996
(51) Int. Cl.: H02J 7/00

(54) **WECHSELAKKU**
INTERCHANGEABLE BATTERY
ACCUMULATEUR INTERCHANGEABLE

(30) Priorität: 26.07.1995 DE 19527201
(43) Veröffentlichungstag der Anmeldung: 13.05.1998
(73) Patentinhaber: Metabowerke GmbH & Co., D-72622 Nürtingen (DE)
(72) Erfinder: HALLER, Ulrich, D-70597 Stuttgart (DE); EBERLE, Robert, D-72622 Nürtingen (DE)
(74) Vertreter: Dreiss, Fuhlendorf, Steimle & Becker, Patentanwälte
(86) Internationale Anmeldenummer: EP9602248
(87) Internationale Veröffentlichungsnummer: WO9705684

(56) Entgegenhaltungen:
- EP-A- 0 561 423

## Beschreibung

Die Erfindung betrifft ein System bestehend aus einem Wechselakku für ein batteriebetriebenes Elektrowerkzeug und zwei Ladegeräten für den Wechselakku. Ein solcher Wechselakku ist durch die Europäische Patentanweldung EP-A-561 423 bekannt geworden.

Ein freiliegende Gegenkontakte aufweisendes Ladegerät wird nachfolgend beispielhaft als Transformatorladegerät und ein abgeschirmte Gegenkontakte aufweisendes Ladegerät wird nachfolgend beispielhaft als Kondensatorladegerät bezeichnet.

Die Aufladung von Wechselakkus mittels Transformatorladegeräten bietet den Vorteil, daß keine wesentlichen Vorkehrungen gegen ein unbeabsichtigtes Berühren der Kontakte des Ladegeräts getroffen werden müssen, da die Spannung auf einen für den Menschen ungefährlichen Niederspannungswert transformiert wurde, welcher etwa der Zellenspannung oder der Summe der Zellenspannungen des Akkus entspricht. Der Ladestromkreis von Kondensatorladegeräten wird hingegen mit Netzspannung betrieben, weshalb die Kontakte eines solchen Ladegeräts den Sicherheitsvorschriften entsprechend gegen unbeabsichtigtes Berühren geschützt sein müssen. Aufgrund der großen Kondensatoren waren Kondensatorladegeräte in der Vergangenheit nur aufwendig und unter hohen Kosten herzustellen. Die Entwicklung von Kondensatoren ist jedoch in der jüngsten Vergangenheit soweit fortgeschritten, daß nun ein wirtschaftliches Interesse am Einsatz der Kondensatortechnik bei der Wiederaufladung von Wechselakkus besteht.

Der Erfindung liegt daher die Aufgabe zugrunde, einen Wechselakku der eingangs beschriebenen Art zu schaffen, der wahlweise unter Verwendung eines Ladegeräts mit abgeschirmten Gegenkontakten oder eines bei einem Benutzer evtl. bereits vorhandenen Ladegeräts mit freiliegenden Gegenkontakten aufgeladen werden kann und der auf wirtschaftliche Weise herstellbar ist. Desweiteren liegt der Erfindung die Aufgabe zugrunde, eine Energielade- und - speichereinrichtung bestehend aus einem Ladegerät und einem jeweiligen Wechselakku bereitzustellen, die gleichfalls kostengünstig herstellbar ist, aber dennoch den einschlägigen Sicherheitsvorschriften über die Abschirmung vcn Kontaktstellen entspricht.

Diese Aufgabe wird bei einem Wechselakku der eingangs beschriebenen Art erfindungsgemäß durch die Merkmale des kennzeichnenden Teils des Anspruchs 1 oder des Anspruchs 2 gelöst.

Ein derart ausgebildeter Wechselakku läßt sich sowohl mittels eines Transformatorladegeräts mit freiliegenden Gegenkontakten als auch unter Verwendung eines Kondensatorladegeräts mit abgeschirmten Gegenkontakten aufladen. Im ersten Fall liegen die Kontakte des Wechselakkus mit ihrer jeweiligen frei zugänglichen Kontaktfläche gegen die freiliegenden Gegenkontakte des Transformatorladegeräts an. Im zweiten Fall wird die Kontaktanordnung des Wechselakkus durch Einschuböffnungen in den abgeschirmten Kontaktbereich des Kondensatorladegeräts eingeführt. Da die Kontakte eines Kondensatorladegeräts unter Netzspannung, also bspw. 230 Volt stehen, muß der Kontaktbereich so abgeschirmt werden, daß ein unbeabsichtigtes Berühren der Kontakte, insbesondere durch Kinder, nicht möglich ist. Nach den derzeit geltenden Sicherheitsvorschriften dürfen die Einführöffnungen für die Kontakte des Wechselakkus höchstens einen lichten Querschnitt von 3 mm aufweisen. Wenn die Kontakte des Wechselakkus erfindungsgemäß als von einer Fläche vorspringende Kontaktzungen-, -dorne oder - stifte ausgebildet sind, können sie durch die Einschuböffnungen in den abgeschirmten Kontaktbereich eines Kondensatorladegeräts eingesteckt und in Kontakt mit den Gegenkontakten dieses Ladegeräts gebracht werden. Wenn die Kontakte des Wechselakkus einen an einer Wand anliegenden bzw. von dieser Wand abgeschirmten Bereich aufweisen, von dem sie bspw. gehalten sind, so wie dies bei Wechselakkus der Fall ist, die für die Verwendung mit Transformatorladegeräten bestimmt sind, wird diese Wand erfindungsgemäß mit einer derart geringen Wandstärke ausgebildet, daß sich die Kontaktanordnung durch die Einführöffnungen eines Ladegeräts mit abgeschirmtem Kontaktbereich einstecken läßt.

Nach einer bevorzugten Ausführungsform der Erfindung, weisen die Kontakte des Wechselakkus eine zweite quer zur ersten Kontaktfläche verlaufende Kontaktfläche auf, mit der sie mit den vor einem Zugriff gesicherten Gegenkcntakten eines Ladegeräts in Kontakt bringbar sind. Bei diesem erfindungsgemäßen Wechselakku erstreckt sich die zweite Kontaktfläche vorzugsweise im wesentlichen senkrecht von der ersten Kontaktfläche weg und bildet die "aktive" Kontaktfläche bei Aufladung mittels eines Kondensatorladegeräts. Dadurch, daß die erste Kontaktfläche der Akku-Kontakte bezüglich eines Gehäuses oder eines Kontaktfußes des Akkus an derselben Stelle bzw. in derselben Ebene verläuft, wie dies bei einem bekannten, allein für die Verwendung mit einem Transformatorladegerät ausgebildeten Wechselakku der Fall ist, läßt sich der erfindungsgemäße Wechselakku sowohl in Verbindung mit dem bekannten Transformatorladegerät als auch mit Kondensatorladegeräten verwenden.

Bei einer bevorzugten Ausführungsform des Wechselakkus weisen die Kontakte eine Schmalseite und eine Breitseite auf, wobei die Schmalseite die erste Kontaktfläche und die Breitseite die zweite Kontaktfläche bildet, ohne daß dies jedoch zwingend erforderlich wäre.

Ein erfindungsgemäßer Wechselakku weist vorteilhafterweise einen die Kontaktanordnung tragenden und formschlüssig in eine Aufnahme eines Ladegeräts einsteckbaren Kontaktfuß auf. Dieser weist vorzugsweise eine in Einsteckrichtung vordere Umfangswandung auf, welche die Kontakte in radialer Richtung gegen mechanische Einwirkungen schützt. Desweiteren ist vorgeschlagen worden, die Kontakte durch eine isolierende Wand voneinander zu trennen, so daß ein Kurzschluß oder ein Überspringen von Funken sicher vermieden werden kann.

Eine bekannte Energielade- und -speichereinrichtung umfaßt entweder ein Ladegerät mit freiliegenden Kontakten in Verbindung mit einem bekannten Wechselakku nach dem Oberbegriff des Anspruchs 1 oder aber ein Ladegerät mit abgeschirmten Gegenkontakten und einen Wechselakku, der jedoch nicht mittels eines freiliegende Gegenkontakte aufweisenden Ladegeräts aufladbar ist.

Eine erfindungsgemäße Energielade- und -speichereinrichtung der eingangs erwähnten Art umfaßt einen erfindungsgemäßen Wechselakku und ein Ladegerät für diesen Wechselakku und ist dadurch gekennzeichnet, daß das Ladegerät einen vor einem Zugriff gesicherten, abgeschirmten Kontaktbereich mit Einschuböffnungen für die Kontakte des Wechselakkus aufweist.

Bei der erfindungsgemäßen Energielade- und -speichereinrichtung sind die Akku-Kontakte mit der - ggf. vorhandenen - angrenzenden Wand in die Einschuböffnungen des Ladegeräts einschiebbar.

Die Gegenkontakte des Ladegeräts können zur Gewährleistung einer sicheren Kontaktierung federnd ausgebildet sein; zur beidseitigen Kontaktierung der Wechselakku-Kontakte bilden die Gegenkontakte des Ladegeräts einen Aufnahmeschlitz für die vorzugsweise zungenförmigen Akku-Kontakte. Hierbei hat es sich als vorteilhaft erwiesen, wenn die Gegenkontakte V-förmig geweitet sind, so daß die Kontaktzungen, die zusätzlich eine Einführschräge aufweisen können, sicher in ihre bestimmungsgemäße Ladeposition gebracht werden können, und ein falsches Einstecken weitestgehend vermieden wird.

Weitere Merkmale, Einzelheiten und Vorteile der Erfindung ergeben sich aus den Patentansprüchen und der beigefügten zeichnerischen Darstellung sowie der nachfolgenden Beschreibung einer bevorzugten Ausführungsform der Erfindung. In der Zeichnung zeigt:
- Figur 1: eine Ansicht eines Wechselakkus und eines Aufnahmeschachts eines Ladegeräts eines erfindungsgemäßen Systems im Schnitt;
- Figur 2: eine Kontaktanordnung des Wechselakkus von unten und in der Seitenansicht;
- Figur 3: die bekannte Kontaktanordnung eines Wechselakkus in den Ansichten gemäß Figur 2; und
- Figur 4: eine schematische Ansicht eines abgeschirmten Kontaktbereichs eines Ladegeräts und eines Kontaktes eines Wechselakkus eines erfindungsgemäßen Systems.

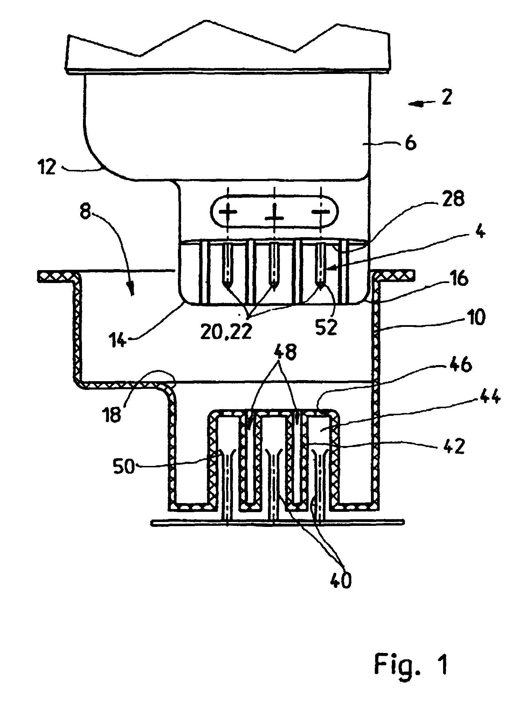

Figur 1 zeigt einen Wechselakku-Pack 2 mit einem eine Kontaktanordnung 4 tragenden Kontaktfuß 6. Der Wechselakku-Pack 2 kann von einem beliebigen Elektrogerät, bspw. einer Bohrmaschine, stammen und ist mit seinem Kontaktfuß 6 in einen Aufnahmeschacht 8 eines nur in diesem Bereich dargestellten Ladegeräts 10 mit abgeschirmten Gegenkontakten, nachfolgend als Kondensatorladegerät bezeichnet, einsteckbar. Die abgerundeten Bereiche 12, 14, 16 des Kontaktfußes 6 wirken dabei ebenso wie ein abgerundeter Kantenbereich 18 des Aufnahmeschachts 8 als Zentrier- und Führungsmittel.

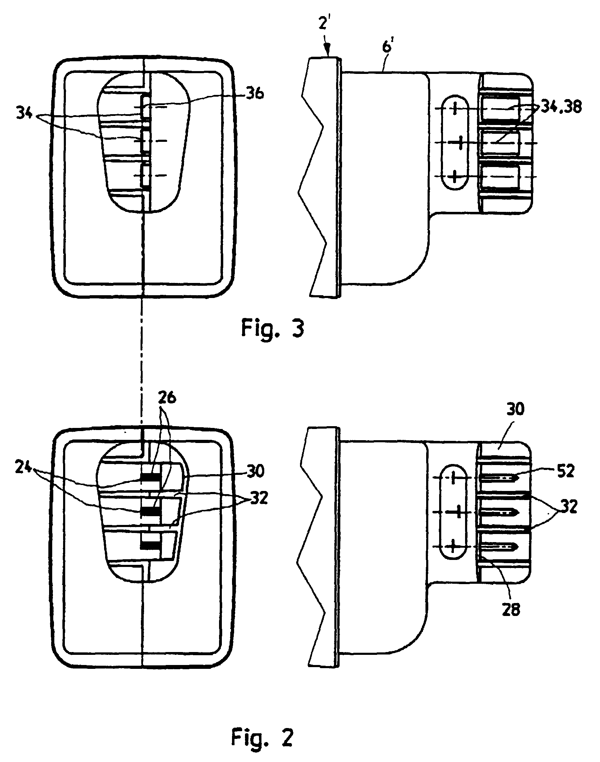

Die Kontakte 20 des Wechselakku-Packs sind in der Form von Kontaktzungen 22 ausgebildet, die eine Schmalseite 24 und eine Breitseite 26 aufweisen, wie aus der Figur 2 ersichtlich ist. Die Kontaktzungen 22 springen von einem Endflächenbereich 28 des Kontaktfußes 6 hervor und sind von in Einsteckrichtung des Kontaktfußes 6 verlaufenden Umfangswänden 30 gegen mechanische Einwirkungen in radialer Richtung geschützt. Die Kontaktzungen 22 sind desweiteren durch zwischen ihnen verlaufende isolierende Wände 32 voneinander getrennt.

Die Schmalseiten 24 der drei Kontaktzungen 22 verlaufen bezüglich des Kontaktfußes 6 in derselben Ebene wie Kontaktflächen 34, bei einem entsprechend ausgebildeten Kontaktfuß 6' eines bekannten Wechselakku-Packs 2' für ein Ladegerät mit freiliegenden Gegenkontakten, nachfolgend als Transformatorladegerät bezeichnet, wie er in Figur 3 dargestellt ist. Die Kontaktflächen 34 des bekannten Wechselakku-Packs sind von flächenhaften über jeweilige Kontakthalter 36 gelegten Kontaktblechen 38 gebildet. Die entsprechenden Gegenkontakte eines nicht dargestellten Transformatorladegeräts sind freiliegend, ohne daß hiervon jedoch eine Gefahr ausginge, da es sich hierbei um Niederspannung in der Größenordnung der Zellenspannung oder der Summe einzelner Zellenspannungen handelt. Demgegenüber wird der Ladestromkreis des Kondensatorladegeräts 10 (Figur 1) mit Netzspannung betrieben, so daß an Kontakten 40 des Ladegeräts 10 eine Spannung von insbesondere 230 Volt liegen kann. Die Kontakte 40 sind demzufolge für einen Benutzer nicht zugänglich am Boden des Aufnahmeschachts 8 angeordnet; sie sind von isolierenden Wänden 42, welche einen jeweiligen Kontakt- bzw. Aufnahmebereich 44 für diese Kontakte 40 sowie die Kontaktzungen 22 des Wechselakku-Packs 2 bilden, die durch jeweilige Einsteckschlitze 46 in die Kontaktbereiche 44 einführbar sind. Beim Einführen oder Einstecken des Kontaktfußes 6 in den Aufnahmeschacht 8 greifen die isolierenden Trennwände 32 in entsprechend ihrer Form ausgebildete Ausnehmungen 48 zwischen den Wänden 42 und gewährleistet hierdurch eine exakte Führung, so daß die Kontaktzungen 22 durch die Einsteckschlitze 46 hindurchgeführt werden.

Die Gegenkontakte 40 des Ladegeräts sind federnd nachgiebig und bilden einen Aufnahmeschlitz für die Kontaktzungen 22. Die Enden 50 der Kontakte 40 sind V-förmig geweitet und wirken zusammen mit einer jeweiligen Einführschräge 52 am vorderen Ende der Kontaktzungen 22 als Zentriermittel.

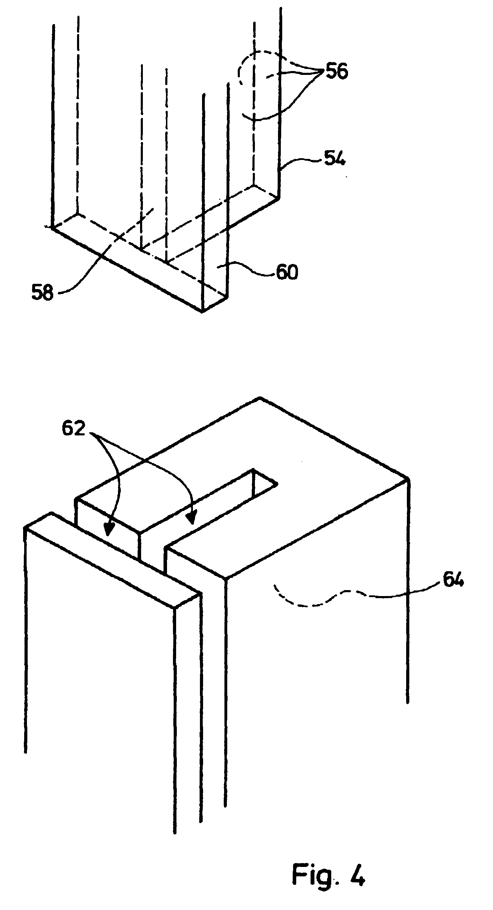

Figur 4 zeigt in schematischer Darstellung eine weitere Erfindungsvariante, wonach ein Wechselakku, von dem lediglich der vordere Bereich eines Kontaktes 54 dargestellt ist, mehrere frei zugängliche Kontaktflächen 56 und einen von einer angrenzenden Wand 60 abgedeckten Bereich 58 aufweist. Die Dicke der Wand 60 ist in Projektion in Einschubrichtung im Sinne der Erfindung so gering, daß der Kontakt 54 mit der Wand 60 durch eine den Schutzvorschriften entsprechend enge Einführöffnung 62 eines abgeschirmten Kontaktbereichs 64 eines Kondensatorladegeräts eingeführt werden kann. Die schlitzförmige Einführöffnung 62 hat den derzeit geltenden Schutzvorschriften entsprechend eine größte Abmessung von höchstens 3 mm. Es wird ausdrücklich darauf hingewiesen, daß die im Querschnitt betrachtete T-förmige Ausbildung der Kontaktgeometrie gemäß Figur 4 lediglich beispielhaft ist, und daß U-, L-förmige oder sonstige Ausbildungen gleichermaßen von der Erfindung erfaßt sind. Um eine sichere Kontaktierung zu erreichen werden auch häufig Kontakte mit sickenförmigen Erhebungen verwendet.

## Patentansprüche

1. System bestehend aus einem Wechselakku (2) für ein batteriebetriebenes Elektrowerkzeug und zwei Ladegeräten für den Wechselakku, wobei das eine Ladegerät freiliegende Gegenkontakte und das andere Ladegerät (10) Netzspannung führende abgeschirmte Gegenkontakte (40) innerhalb eines bis auf eng begrenzte Einschuböffnungen (46) abgeschirmten Kontaktbereichs (44) aufweist, und wobei der Wechselakku (2) zum Aufladen der Akkuzelle oder-zellen mittels des freiliegende Gegenkontakte aufweisenden Ladegeräts mit einer Kontaktanordnung (4) versehen ist, die je Kontakt (20) eine erste frei zugängliche Kontaktfläche (24) aufweist, und wobei die Kontakte des Wechselakkus von einer Fläche (28) vorstehende Kontaktzungen (22), -dorne oder -stifte sind, die in den bis auf eng begrenzte Einschuböffnungen (46) abgeschirmten Kontaktbereich (44) des anderen Ladegeräts (10) mit abgeschirmten Gegenkontakten (40) einführbar und so angeordnet sind, dass die erste frei zugängliche (24) oder eine weitere quer dazu verlaufende Kontaktfläche (26) beim Einführen der Kontakte an den jeweiligen Gegenkontakt (40) dieses Ladegeräts (10) angelegt wird, so dass der Wechselakku (2) sowohl von dem einen als auch von dem anderen Ladegerät aufladbar ist.

2. System, bestehend aus einem Wechselakku für ein batteriebetriebenes Elektrowerkzeug und zwei Ladegeräten für den Wechselakku, wobei das eine Ladegerät freiliegende Gegenkontakte und das andere Ladegerät Netzspannung führende abgeschirmte Gegenkontakte innerhalb eines bis auf eng begrenzte Einschuböffnungen (62) abgeschirmten Kontaktbereichs (64) aufweist, und wobei der Wechselakku zum Aufladen der Akkuzelle oder -zellen mittels des freiliegende Gegenkontakte aufweisenden Ladegeräts mit einer Kontaktanordnung versehen ist, die je Kontakt (54) eine erste frei zugängliche Kontaktfläche (56) aufweist, und wobei die Kontakte des Wechselakkus wenigstens einen von wenigstens einer Wand (60) abgeschirmten Bereich (58) aufweisen und die Wand (60) eine derart geringe Wandstärke aufweist, dass die Kontakte (54) des Wechselakkus mitsamt der Wand (60) in den abgeschirmten Kontaktbereich (64) des anderen Ladegeräts mit abgeschirmten Gegenkontakten einführbar sind, und wobei die Kontakte so angeordnet sind, dass die erste frei zugängliche (56) oder eine weitere quer dazu verlaufende Kontaktfläche beim Einführen der Kontakte (54) an den jeweiligen Gegenkontakt dieses Ladegeräts angelegt wird, so dass der Wechselakku sowohl von dem einen als auch von dem anderen Ladegerät aufladbar ist.

3. System nach Anspruch 1 oder 2, dadurch gekennzeichnet, daß die Kontakte (20, 54) des Wechselakkus (2) eine Schmalseite (24) und eine Breitseite (26) aufweisen, wobei die Schmalseite die erste Kontaktfläche und die Breitseite die zweite Kontaktfläche bildet.

4. System nach einem der vorstehenden Ansprüche, gekennzeichnet durch einen die Kontaktanordnung (4) tragenden und formschlüssig in einen Aufnahmeschacht (8) eines Ladegeräts einsteckbaren Kontaktfuß (6).

5. System nach Anspruch 4, dadurch gekennzeichnet, daß der Kontaktfuß (6) eine in Einsteckrichtung erstreckte vordere Umfangswandung (30) aufweist, welche die Kontakte (20) in radialer Richtung gegen mechanische Einwirkungen schützt.

6. System nach einem oder mehreren der vorstehenden Ansprüche, dadurch gekennzeichnet, daß die Kontakte (20) durch eine isolierende Wand (32) voneinander getrennt sind.

7. System nach einem oder mehreren der vorstehenden Ansprüche, dadurch gekennzeichnet, daß die Kontakte (20, 54) an ihrem in Einschubrichtung vorderen Ende eine Einführschräge (52) aufweisen.

## Claims

1. A system comprising an interchangeable storage battery (2) for a battery-operated electric tool and two chargers for the interchangeable storage battery, in which the one charger has exposed mating contacts and the other charger (10) has shielded mating contacts (40) carrying mains voltage inside a contact region (44) shielded except for narrowly bounded feed-in openings (46), and in which, for the purpose of charging the storage battery cell or cells by means of the charger having the exposed mating contacts, the interchangeable storage battery (2) is provided with a contact arrangement (4) which has, for each contact (20), a first freely accessible contact surface (24), and in which the contacts of the interchangeable storage battery are contact tabs (22), contact mandrels or contact pins which project from a surface (28) and can be introduced into the contact region (44) of the other charger (10) having shielded mating contacts (40), which contact region is shielded except for narrowly bounded feed-in openings (46), and which are disposed in such a way that the first freely accessible contact surface (24) or a further contact surface (26) extending transversely thereto is brought into contact with the respective mating contact (40) of said charger (10) when the contacts are introduced so that the interchangeable storage battery (2) can be charged both by the one charger and by the other charger.

2. A system comprising an interchangeable storage battery for a battery-operated electric tool and two chargers for the interchangeable storage battery, in which the one charger has exposed mating contacts and the other charger has shielded mating contacts carrying mains voltage inside a contact region (64) shielded except for narrowly bounded feed-in openings (62), and in which, for the purpose of charging the storage battery cell or cells by means of the charger having the exposed mating contacts, the interchangeable storage battery is provided with a contact arrangement which has, for each contact (54), a first freely accessible contact surface (56), and in which the contacts of the interchangeable storage battery have at least one region (58) shielded by at least one wall (60) and the wall (60) has such a small wall thickness that the contacts (54) of the interchangeable storage battery, together with the wall (60), can be introduced into the shielded contact region (64) of the other charger having shielded mating contacts, and in which the contacts are disposed in such a way that the first freely accessible contact surface (56) or a further contact surface extending transversely thereto is brought into contact with the respective mating contact of said charger when the contacts (54) are introduced so that the interchangeable storage battery can be charged both by the one charger and by the other charger.

3. A system according to Claim 1 or 2, characterized in that the contacts (20, 54) of the interchangeable storage battery (2) have a narrow side (24) and a wide side (26), the narrow side forming the first contact surface and the wide side the second contact surface.

4. A system according to one of the preceding claims, characterized by a contact base (6) which supports the contact arrangement (4) and can be plugged in a shape-locked manner into a receiving compartment (8) of a charger.

5. A system according to Claim 4, characterized in that the contact base (6) has a front peripheral wall (30) which extends in the plug-in direction and which protects the contacts (20) against mechanical action in the radial direction.

6. A system according to one or more of the preceding claims, characterized in that the contacts (20) are separated from one another by an insulating wall (32).

7. A system according to one or more of the preceding claims, characterized in that the contacts (20, 54) have an feed-in chamfer (52) at their front end in the insertion direction.

## Revendications

1. Système composé d'un accumulateur interchangeable (2) pour un outil électrique alimenté par batterie et de deux chargeurs pour l'accumulateur interchangeable, dans lequel l'un des chargeurs présente des contacts complémentaires dégagés tandis que l'autre chargeur (10) présente des contacts complémentaires (40) protégés conduisant la tension du réseau, à l'intérieur d'une zone de contact (44) protégée à l'exception d'orifices d'insertion (46) étroits, dans lequel l'accumulateur interchangeable (2) est doté d'un agencement de contacts (4) pour charger le ou les éléments d'accumulateur au moyen du chargeur à contacts complémentaires dégagés, lequel agencement de contacts présente sur chaque contact (20) une première surface de contact librement accessible (24), et dans lequel les contacts de l'accumulateur interchangeable consistent en des lames, broches ou fiches de contact (22) en débordement d'une surface (28), qui peuvent être insérées dans la zone de contact (44), protégée à l'exception des orifices d'insertion (46) étroits, de l'autre chargeur (10) à contacts complémentaires (40) protégés, et qui sont agencées de telle sorte que la première surface de contact (24) librement accessible ou une autre surface de contact (26) qui lui est perpendiculaire est en contact avec le contact complémentaire associé (40) dudit chargeur 10, après introduction des contacts, de sorte que l'accumulateur interchangeable (2) peut être chargé tant par un chargeur que par l'autre.

2. Système composé d'un accumulateur interchangeable pour un outil électrique alimenté par batterie et de deux chargeurs pour l'accumulateur interchangeable, dans lequel l'un des chargeurs présente des contacts complémentaires dégagés tandis que l'autre chargeur présente des contacts complémentaires protégés conduisant la tension du réseau, à l'intérieur d'une zone de contact (64) protégée à l'exception d'orifices d'insertion (62) étroits, dans lequel l'accumulateur interchangeable est doté d'un agencement de contacts pour charger le ou les éléments d'accumulateur au moyen du chargeur à contacts complémentaires dégagés, lequel agencement de contacts présente sur chaque contact (54) une première surface de contact librement accessible (56), dans lequel les contacts de l'accumulateur interchangeable présentent au moins une zone (58) protégée par au moins une paroi (60) et ladite paroi (60) est de si faible épaisseur que les contacts (54) de l'accumulateur interchangeable peuvent être insérés avec la paroi (60) dans la zone de contact (64) protégée de l'autre chargeur à contacts complémentaires protégés, et dans lequel les contacts sont agencés de telle sorte que la première surface de contact (56) librement accessible ou une autre surface de contact qui lui est perpendiculaire est en contact avec le contact complémentaire associé dudit chargeur, après introduction des contacts (54), de sorte que l'accumulateur interchangeable peut être chargé tant par un chargeur que par l'autre.

3. Système selon la revendication 1 ou 2, caractérisé en ce que les contacts (20, 54) de l'accumulateur interchangeable (2) présentent un côté étroit (24) et un côté large (26), le côté étroit formant la première surface de contact et le côté large formant la seconde surface de contact.

4. Système selon l'une quelconque des revendications précédentes, caractérisé par un socle de contact (6) supportant l'agencement de contacts (4) et enfichable positivement dans une prise réceptrice (8) d'un chargeur.

5. Système selon la revendication 4, caractérisé en ce que le socle de contact (6) présente une paroi périphérique (30) avant dans le sens d'enfichage, laquelle paroi protège radialement les contacts (20) contre les sollicitations mécaniques.

6. Système selon l'une au moins des revendications précédentes, caractérisé en ce que les contacts (20) sont séparés les uns des autres par une paroi d'isolation (32).

7. Système selon l'une au moins des revendications précédentes, caractérisé en ce que les contacts (20, 54) présentent une rampe d'introduction (52) sur leur extrémité antérieure dans le sens d'enfichage.
